# EUROPEAN PATENT APPLICATION

(11) **EP 4 017 181 A1**
(43) Date of publication of application: **22.06.2022**
(21) Application number: 20855634.0
(22) Date of filing: 14.07.2020
(51) Int. Cl.: H04W 72/04, H04W 72/12

(54) **RESOURCE TRANSMISSION METHOD, TERMINAL, AND NETWORK DEVICE**

(30) Priority: 16.08.2019 CN 201910760155
(71) Applicant: Datang Mobile Communications Equipment Co., Ltd., Beijing 100085 (CN)
(72) Inventor: BAI, Wei, Beijing 100083 (CN); GAO, Xuejuan, Beijing 100083 (CN); XING, Yanping, Beijing 100083 (CN)
(74) Representative: dompatent von Kreisler Selting Werner - Partnerschaft von Patent- und Rechtsanwälten mbB
(86) International application number: PCT/CN2020/101849
(87) International publication number: WO 2021/031743

(57) **Abstract**

The present disclosure provides a resource transmission method, a terminal and a network device. When the method is applied to a terminal, it includes: obtaining a notification signalling sent by a network device according to the status of a configured grant resource, the notification signalling comprises configured grant resource status information, and the configured grant resource status information comprises at least one of an idle state and an occupied state; selecting, according to the configured grant resource status information, a configured grant resource in an idle state to transmit a physical uplink shared channel PUSCH, or sending a scheduling request SR when the configured grant resources are all in the occupied state.

## Description

### CROSS-REFERENCE TO RELATED APPLICATION

The present application claims a priority to the Chinese patent application No. 201910760155.8 filed in China on August 16, 2019, a disclosure of which is incorporated herein by reference in its entirety.

### TECHNICAL FIELD

The present disclosure relates to the field of communication technology, in particular to a resource transmission method, a terminal and a network device.

### BACKGROUND

For each user equipment (UE), service, or a configuration of a service, a resource is allocated by a network device, and the resources may be the same or different among different terminals. When some terminals share a resource, collision may occur among the terminals, which affects latency and reliability. When each terminal occupies a resource exclusively, no collision occurs among the terminals, the latency and reliability can be ensured, but the resource utilization rate is lowered.

### SUMMARY

The present disclosure provides a resource transmission method, a terminal and a network device, which solve the problem of collisions caused by terminals sharing a resource.

The embodiments of the present disclosure provide a resource transmission method, applied to a terminal, including:

obtaining a notification signalling sent by a network device according to the status of a configured grant resource, the notification signalling comprising configured grant resource status information, and the configured grant resource status information comprising at least one of an idle state and an occupied state;

selecting, according to the configured grant resource status information, a configured grant resource in an idle state to transmit a physical uplink shared channel PUSCH, or sending a scheduling request SR when the configured grant resources are all in the occupied state.

Optionally, the method further includes:
continuing to transmit the PUSCH on the selected configured grant resource, if the selected configured grant resource is in an occupied state, in the configured grant resource status information obtained in a transmission process.

Optionally, before obtaining the notification signalling sent by the network device according to the status of the configured grant resource, the method further includes:
obtaining the resource configuration signalling sent by the network device, the resource configuration signalling comprising configuring M configured grant resources for each configured grant, wherein M ≥ 1.

Optionally, the selecting the configured grant resource in the idle state to transmit the PUSCH includes:
selecting the configured grant resource with the highest priority from the configured grant resources in the idle state to transmit the PUSCH, according to the preset priority.

Optionally, the notification signalling further includes:
collision information about collisions on the configured grant resource.

The embodiments of the present disclosure also provide a resource transmission method, applied to a network device, including:
detecting a status of a configured grant resource;
sending a notification signalling according to the status of the configured grant resource, the notification signalling comprising configured grant resource status information, and the configured grant resource status information comprising at least one of an idle state and an occupied state;
receiving a scheduling request SR sent by a terminal, or a physical uplink shared channel PUSCH transmitted on the configured grant resource.

Optionally, before sending notification signalling, the method further includes:
sending a resource configuration signalling, the resource configuration signalling comprising configuring M configured grant resources for each configured grant, wherein M ≥ 1.

Optionally, the notification signalling further includes:
collision information about collisions on the configured grant resource.

The embodiments of the present disclosure also provide a terminal, including: a transceiver, a memory, a processor, and a computer program stored in the memory and configured to be executed by the processor, wherein the processor is configured to execute the computer program to implement following steps:
obtaining a notification signalling sent by a network device according to the status of a configured grant resource, the notification signalling including configured grant resource status information, and the configured grant resource status information including at least one of an idle state and an occupied state;
selecting, according to the configured grant resource status information, a configured grant resource in an idle state to transmit a physical uplink shared channel PUSCH, or sending a scheduling request SR when the configured grant resources are all in the occupied state.

Optionally, the processor is configured to execute the computer program to implement following steps:
continuing to transmit the PUSCH on the selected configured grant resource, if the selected configured grant resource is in an occupied state, in the configured grant resource status information obtained in a transmission process.

Optionally, the processor is configured to execute the computer program to implement following steps:
obtaining the resource configuration signalling sent by the network device, the resource configuration signalling including configuring M configured grant resources for each configured grant, wherein M ≥ 1.

Optionally, the processor is configured to execute the computer program to implement following steps:
selecting the configured grant resource with the highest priority from the configured grant resources in the idle state to transmit the PUSCH, according to the preset priority.

Optionally, the notification signalling further includes:
collision information about collisions on the configured grant resource.

The embodiments of the present disclosure also provide a network device, including: a transceiver, a memory, a processor, and a computer program stored in the memory and configured to be executed by the processor, wherein the processor is configured to execute the computer program to implement following steps:
detecting a status of a configured grant resource;
sending a notification signalling according to the status of the configured grant resource, the notification signalling comprising configured grant resource status information, and the configured grant resource status information comprising at least one of an idle state and an occupied state;
receiving a scheduling request SR sent by a terminal, or a physical uplink shared channel PUSCH transmitted on the configured grant resource.

Optionally, the processor is configured to execute the computer program to implement following steps:
sending a resource configuration signalling, the resource configuration signalling including configuring M configured grant resources for each configured grant, wherein M ≥ 1.

Optionally, the notification signalling further includes:
collision information about collisions on the configured grant resource.

The embodiments of the present disclosure also provide a terminal, including:
a first obtaining module, configured to obtain a notification signalling sent by a network device according to the status of a configured grant resource, the notification signalling including configured grant resource status information, and the configured grant resource status information including at least one of an idle state and an occupied state;
a first processing module, configured to select, according to the configured grant resource status information, a configured grant resource in an idle state to transmit a physical uplink shared channel PUSCH, or to send a scheduling request SR when the configured grant resources are all in the occupied state.

The embodiments of the present disclosure also provide a network device, including:
a detection module, configured to detect a status of a configured grant resource;
a first sending module, configured to send a notification signalling according to the status of the configured grant resource, the notification signalling including configured grant resource status information, and the configured grant resource status information including at least one of an idle state and an occupied state;
a receiving module, configured to receive a scheduling request SR sent by a terminal or a physical uplink shared channel PUSCH transmitted on the configured grant resource.

The embodiments of the present disclosure also provide a computer-readable storage medium storing thereon a computer program, and the computer program is configured to be executed by a processor to implement the steps of the resource transmission method as described above.

The beneficial effects of the above technical solutions of the present disclosure are as follows.

The terminal obtains the notification signalling sent by the network device according to the status of the configured grant resource, the notification signalling includes configured grant resource status information, the configured grant resource status information includes at least one of an idle state and an occupied state, and the terminal selects, according to the configured grant resource status information, a configured grant resource in the idle state to transmit the physical uplink shared channel PUSCH, or send a scheduling request SR when the configured grant resources are all in the occupied state. The terminal can obtain the configured grant resource status information in real time, so as to transmit the PUSCH on the configured grant resource in the idle state, and when there is no configured grant resource in the idle state, the terminal can notify the network device by sending an SR to schedule the terminal for retransmission, which ensures the latency and reliability, and improves the resource utilization of the system.

### BRIEF DESCRIPTION OF THE DRAWINGS

Fig. 1 shows one of the schematic diagrams of resource configuration according to some embodiments of the present disclosure;
Fig. 2 shows the second schematic diagram of resource configuration according to some embodiments of the present disclosure;
Fig. 3 shows one of the flowcharts of the resource transmission method according to some embodiments of the present disclosure;
Fig. 4 shows the second flowchart of the resource transmission method according to some embodiments of the present disclosure;
Fig. 5 shows a schematic module diagram of a terminal according to some embodiments of the present disclosure;
Fig. 6 shows a schematic module diagram of a network device according to some embodiments of the present disclosure;
Fig. 7 shows a structural block diagram of a terminal according to some embodiments of the present disclosure;
Fig. 8 shows a structural block diagram of a network device according to some embodiments of the present disclosure.

### DETAILED DESCRIPTION

In order to make the technical problem to be solved, the technical solutions and advantages of the present disclosure clearer, the present disclosure will be described in detail below with reference to the drawings and specific embodiments. In the following description, specific details such as specific configurations and specific details of components are provided only to help a comprehensive understanding of the embodiments of the present disclosure. Therefore, it should be clear to those skilled in the art that various changes and modifications can be made to the embodiments described herein without departing from the scope and spirit of the present disclosure. In addition, for clarity and conciseness, descriptions of known functions and configurations are omitted.

It should be understood that "one embodiment" or "an embodiment" mentioned throughout the present disclosure means that a specific feature, structure, or characteristic related to the embodiment is included in at least one embodiment of the present disclosure. Therefore, "in one embodiment" or "in an embodiment" in various places throughout the present disclosure do not necessarily refer to the same embodiment. In addition, these specific features, structures, or characteristics can be combined in one or more embodiments in any suitable manner.

In the various embodiments of the present disclosure, it should be understood that the size of the sequence number of the following processes does not mean the order of execution. The execution order of each process should be determined by its function and internal logic, and should not constitute any limitation to the implementation process of the embodiments of the present disclosure.

In addition, the terms "system" and "network" in the present disclosure are often used interchangeably in the present disclosure.

In the embodiments provided in the present disclosure, it should be understood that "B corresponding to A" means that B is associated with A, and B can be determined according to A. However, it should also be understood that determining B according to A does not mean that B is determined only according to A, and B can also be determined according to A and/or other information.

In the embodiments of the present disclosure, the form of the access network is not limited, and may include Macro Base Station, Pico Base Station, Node B (the name of the 3G mobile base station), Evolved Node B (eNB), Femto eNB or Home eNode B or Home eNB or HeNB, Relay Station, Access Point, Remote Radio Unit (RRU), Remote Radio Head (RRH) and etc. The user terminal can be a mobile phone (or cell phone), or other equipment capable of sending or receiving wireless signals, including user equipment, Personal Digital Assistant (PDA), wireless modem, wireless communication device, handheld device, laptop, cordless phone, Wireless Local Loop (WLL) station, Customer Premise Equipment (CPE) that can convert mobile signals into wireless fidelity (WIFI) signals, or mobile smart hotspot, smart home appliance, or other devices that can spontaneously communicate with the mobile communication network without human operation.

With the development and change of mobile communication service requirements, many organizations such as the Third Generation Partnership Project (3GPP) have begun to study the new 5th Generation New RAT (5G NR) for future mobile communication systems. In the 5G NR system, an important requirement is low-latency and high-reliability communication, so transmission schemes such as ultra-reliable and low-latency communications (URLLC) have emerged. Simple low-latency requirements or pure high-reliability requirements are relatively easy to achieve, but it is difficult to meet both low-latency requirements and high-reliability requirements at the same time, and it is usually achieved at the cost of high complexity. For URLLC services, in the NR standard, the uplink scheduling-free scheme will be supported, that is, the resource and transmission method will be indicated in the form of configured grant to reduce the air interface transmission latency, and at the same time, the repetitive transmission scheme will be supported to increase reliability.

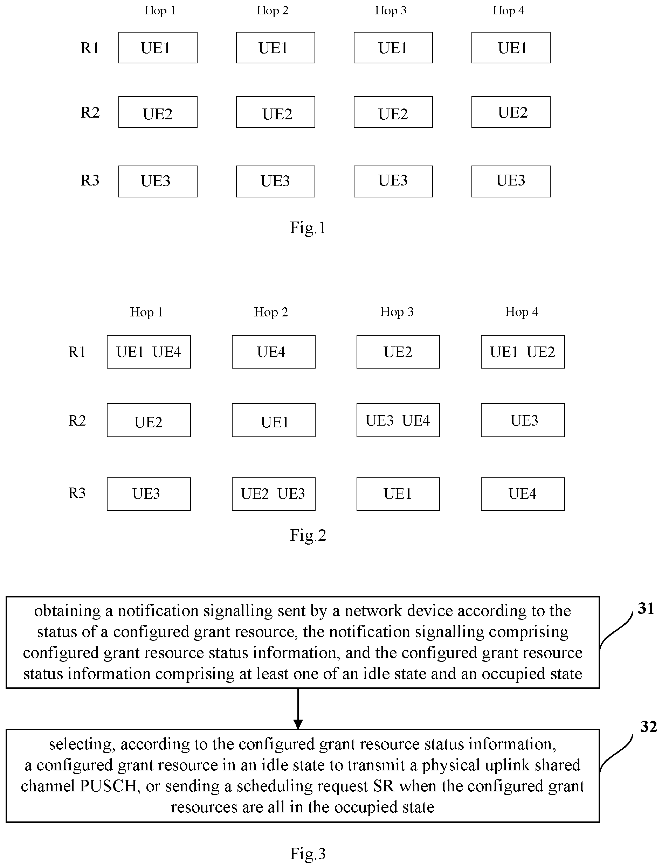

If each service or each configuration in a service exclusively occupies a resource, although collisions are avoided, the resource utilization rate is low. As shown in Fig. 1, three UEs (UE1-UE3, each UE has one service) are allocated three frequency domain resources R1, R2, R3, which can be used in non-frequency hopping or frequency hopping mode, and the frequency diversity gain can be obtained in frequency hopping mode. If frequency hopping is used, there are first ~ fourth hops (i.e., Hop1~Hop4) in the time domain, and four PUSCHs are repeatedly transmitted in sequence. Each UE only occupies one frequency domain resource on each Hop, and there is no collision between UEs. However, among the three UEs, if UE3 only occasionally transmits data, it will not always occupy resources, but in order to ensure latency and reliability, the resources need to be reserved for UE3 all the time, which will result in low resource utilization.

Resource sharing is realized through frequency hopping technology. For example, as shown in Fig. 2, if 4 UEs reserve only 3 frequency-domain resources (i.e., R1, R2, R3), 4 UEs share 3 frequency domain resources, 3 frequency-domain resources can support 4 UEs or more UEs, which can improve the resource utilization. However, each UE is subject to two interferences, wherein UE1 is subject to interference (i.e., collision) from different UEs on Hop1 and Hop4, and not on Hop2 and Hop3. When UE4 does not send PUSCH, UE1 is not be interfered on Hop1, Hop2 and Hop3, and UE1 is still be interfered on Hop4. Even if both UE3 and UE4 do not send PUSH, there will still be collisions between UE1 and UE2 on resource R1 and Hop4, which affects latency and reliability.

Therefore, the embodiments of the present disclosure provide a resource transmission method, which solves the problems in the related field that some terminals sharing a resource may easily cause collisions, and each terminal exclusively occupies a resource resulting in low resource utilization.

Specifically, as shown in Fig. 3, the embodiments of the present disclosure provide a resource transmission method, applied to a terminal, specifically including the following steps:

Step 31: obtaining a notification signalling sent by the network device according to the status of the configured grant resource, the notification signalling includes configured grant resource status information, and the configured grant resource status information includes at least one of an idle state and an occupied state.

Specifically, the notification signalling is sent once every interval of a preset period of time, and the preset period is a preset interval between two adjacent notification signalling transmissions, which is used to indicate that the notification signalling is updated and sent in real time. Each transmission time of notification signalling can also be independently determined by the network device. Before the terminal transmits the PUSCH, the network device will send notification signalling to the terminal. During the transmission of the PUSCH by the terminal, the network device will also send notification signalling to the terminal to notify the terminal of the current status of each configured grant resource. Among them, the configuration grant mode is the uplink scheduling-free mode.

Step 32: selecting, according to the configured grant resource status information, a configured grant resource in an idle state to transmit the physical uplink shared channel PUSCH, or sending a scheduling request SR when all the configured grant resources are in the occupied state.

Specifically, when the terminal needs to transmit the PUSCH, the terminal, according to the configured grant resource status information, selects configured grant resource in the idle state to transmit the PUSCH if the configured grant resource status information includes a configured grant resource in the idle state. If the configured grant resources are all in the occupied state in the configured grant resource status information, the terminal may send a scheduling request SR to the network device and notify the network device by SR to schedule the terminal for retransmission, which ensures the latency and reliability. The terminal can also continue to wait for the next configured grant resource status information.

In the above-mentioned embodiments of the present disclosure, the terminal obtains the notification signalling sent by the network device according to the status of the configured grant resource, the notification signalling including configured grant resource status information, and the configured grant resource status information including at least one of idle state and occupied state. The terminal selects the configured grant resource in the idle state to transmit a physical uplink shared channel PUSCH according to the configured grant resource status information, or sends an SR when the configured grant resources are all in the occupied state, or the terminal waits for the next configured grant resource status information when the configured grant resources are all in the occupied state. The terminal can obtain the configured grant resource status information in real time, so as to transmit the PUSCH on the configured grant resource in the idle state, and when there is no configured grant resource in the idle state, the terminal can notify network device by sending an SR to schedule the terminal for transmission, which ensures the latency and reliability. On the premise that the latency requirement can be met, the terminal waits for the next configured grant resource status information when the configured grant resources are all in the occupied state.

Further, the method may also include:
continuing to transmit the PUSCH on the selected configured grant resource, if the selected configured grant resource is in the occupied state, in the configured grant resource status information obtained in the transmission process.

Specifically, in the process of transmitting the PUSCH by the terminal, the network device updates the configured grant resource for transmitting the PUSCH by the terminal to the occupied state, and the terminal obtains the updated configured grant resource status information sent by the network device. If the configured grant resource selected by the terminal is in the occupied state in the configured grant resource status information, which means that the configured grant resource selected by the terminal is occupied by the terminal and used for the terminal to transmit the PUSCH, the terminal will not select the configured grant resource in the idle state for transmitting the PUSCH, but continue to transmit the PUSCH in the configured grant resource selected by the terminal.

Further, before step 31, the method may further include:
obtaining the resource configuration signalling sent by the network device, the resource configuration signalling including configuring M configured grant resources for each configured grant, wherein M ≥ 1.

Specifically, in the total number N of all transmissions supported by the network device, each configured grant is configured with M configured grant resources, and the total number N of transmissions refers to the total number of configured grants distinguishable by all terminals, all services, and all resources that is, a transmission refers to the PUSCH transmission of one terminal, it may also refer to the PUSCH transmission of one service of one of the terminals, or it may refer to the PUSCH transmission of one of the services of one of the terminals. Among them, M ≤ N, when M is 1, N may be 2 or 3, etc., and all N transmissions are transmitted in the same configured grant resource. If occupation occurs in the configured grant resource, the terminal sends an SR to the network device.

When M is greater than 1, all N transmissions can be transmitted in M configured grant resources. The network device notifies the terminal using signalling such as downlink control information (DCI), the signalling may configure which of the group-common DCI configured grant resources are configured grant resources in the idle state and which are configured grant resources in the occupied state; if the signalling indicates that there are no configured grant resources in the idle state, when one of the transmissions requires configured grant resources for transmission, the transmission can switch the configured grant mode to the SR mode, or the terminal can continue to obtain whether there are configured grant resources in the idle state in the next configured grant resource status information. When a certain transmission does not require configured grant resources for transmission, the configured grant resource status information sent by the network device may be ignored. The way of ignoring may be not receiving the configured grant resource status information sent by the network device, or may be discarding the information after receiving the configured grant resource status information, or may be storing the information after receiving it.

Specifically, in the activation signalling or the radio resource control (RRC), M configured granted resources are indicated for each transmission, the configuration may be time division multiplexing (TDM) resources, may be frequency division multiplexing (FDM) resources, or may be TDM +FDM.

Further, the selecting the configured grant resource in the idle state to transmit the PUSCH in step 32 may specifically include:
selecting the configured grant resource with the highest priority from the configured grant resources in the idle state to transmit the PUSCH, according to the preset priority.

Specifically, the M configured grant resources may be prioritized according to preset priorities. In the case that the configured grant resource status information includes the configured grant resource in the idle state, according to the preset priority, the configured grant resource with the highest priority can be selected from the configured grant resource in the idle state to transmit the PUSCH; if no priority order is set, one of the configured grant resources in the idle state may be randomly selected.

Further, the notification signalling may also include:
collision information about collisions on the configured grant resource.

Specifically, if the terminal is in the process of transmitting PUSCH on one of the configured grant resources and there are other terminals that also want to occupy the configured grant resource, collisions will occur on the configured grant resource. If the collision information sent by the network device and the updated configured grant resource status information are received, the terminal knows from the received configured grant resource status information which configured grant resources are in the idle state and which are in the occupied state. The terminal selects the configured grant resources that are in the idle state at this time to transmit the PUSCH, and if all the configured grant resources are in the occupied state, the terminal sends an SR to the network device or waits for the network device to send the next configured grant resource status information.

Specifically, if the terminal is in the process of transmitting PUSCH on one of the configured grant resources and there are other terminals that also want to occupy the configured grant resource, collisions will occur on the configured grant resource. If the network device detects that collision occurs between two or more terminals, the network device can schedule part or all of the terminals that have collisions to retransmit. When all terminals that have collisions are scheduled for retransmission, the network device sets the status of the above-mentioned configured grant resource to the idle state and when a terminal that has a collision is not scheduled for retransmission, the network device sets the above configured grant resource to the occupied state.

Specifically, when the terminal needs configured grant resources to transmit the PUSCH, the terminal selects one of the configured grant resources in the idle state for transmission. If there is no collision during transmission, the configured grant resource will be occupied until the PUSCH transmission is completed. Wherein, if the configured grant resource has PUSCH transmission, the configured grant resource is in the occupied state. If the network device detects that a certain transmission ends and the preset condition is met, the network device identifies that the configured grant resource is in the idle state. The preset condition may be that there is no PUSCH transmission for t consecutive transmission opportunities. The value of t is not limited.

The above method will be described in detail below through a specific embodiment.

For example, there are a total of 10 UEs (UE1~UE10), each UE has a service, each service has a configuration, 10 FDM resource are normally required, but the network device configured 5FDM resource (R1-R5) for each of the 10 UEs. Among them, the preset priorities of the configured grant resources of UE1 and UE2 are R1, R2, R3, R4, R5 in order, and the preset priorities of the configured grant resources of UE3 and UE4 are R2, R3, R4, R5, R1 in order, and the following can be configured in order according to this rule; the network device detects that the status of each configured grant resource is idle, and the network device sends the configured grant resource status information to each UE, and the terminal knows that the status of each configured grant resource is in idle state; UE1, UE3, UE5, UE7, UE9 need to send PUSCH respectively, then R1-R5 are selected to transmit the PUSCH respectively and remain occupied until PUSCH is sent; in this process, UE can ignore the network device sending configured grant resource status information. During the PUSCH transmission, all 5 resources are in the occupied state, if UE2 wants to send a PUSCH, but detects that all 5 configured grant resources are in the occupied state, UE2 sends an SR to the network device. If UE3 finishes transmitting PUSCH and the network device detects that R2 has no PUSCH transmission for 2 consecutive transmission opportunities, the network device updates the configured grant resource status to the idle state, and sends the updated notification signalling to the terminal at the same time; UE4 and UE6 receive the notification signalling and both want to send PUSCH; if UE4 and UE6 both select R2 and send PUSCH at the same time and the network device detects a collision between UE4 and UE6 on R2, the network device sends a collision message to UE6 to notify UE6 that a collision has occurred. UE4 can continue to use R2 for sending PUSCH; UE6 finds that all 5 resources are in the occupied state according to the configured grant resource status information, then UE6 sends SR to the network device.

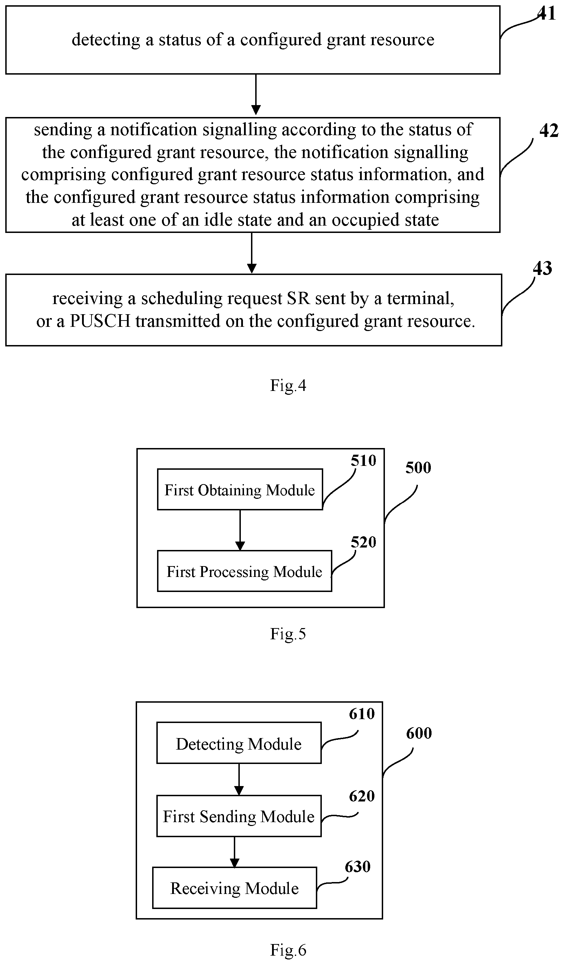

As shown in Fig. 4, the embodiments of the present disclosure also provide a resource transmission method, applied to a network device, specifically including the following steps.

Step 41: detecting the status of the configured grant resource.

Specifically, the network device detects the real time status of each configured grant resource in real time.

Step 42: sending a notification signalling according to the status of the configured grant resource, the notification signalling including configured grant resource status information, and the configured grant resource status information includes at least one of an idle state and an occupied state.

Specifically, the notification signalling is sent once every interval of a preset period of time, and the preset period being a preset interval between two adjacent notification signalling transmissions, which is used to indicate that the notification signalling is updated and sent in real time. The network device sends the notification signalling to the terminal and during the transmission of the PUSCH by the terminal, the network device also sends the notification signalling to the terminal to notify the terminal of the current status of each configured grant resource. Each transmission moment of the notification signalling can be independently determined by the network device.

Step 43: receiving the scheduling request SR sent by the terminal or transmitting the PUSCH on the configured grant resource.

Specifically, the network device receives the PUSCH on M configured grant resources, and when the PUSCH is successfully received, the network device may submit the received PUSCH to the core network.

In the above-mentioned embodiment of the present disclosure, the network device sends the detected configured grant resource status information to the terminal, so that the terminal can obtain the configured grant resource status information in real time, thereby transmitting the PUSCH on the configured grant resource in the idle state, and notifying the network device to schedule the terminal for transmission by sending an SR when there is no configured grant resource in the idle state, which ensures the latency and reliability. On the premise that the latency requirement can be met, the network device updates the configured grant resource status information and sends the information to the terminal, and the terminal can wait for the updated configured grant resource status information.

Further, before step 42, the method may further include:
sending resource configuration signalling, the resource configuration signalling including configuring M configured grant resources for each configured grant, wherein M ≥ 1.

Specifically, in the total number N of all transmissions supported by the network device, each configured grant is configured with M configured grant resources, and the total number N of transmissions refers to the total number of configured grants distinguishable by all terminals, all services, and all resources that is, a transmission refers to the PUSCH transmission of one terminal, it may also refer to the PUSCH transmission of one service of one of the terminals, or it may refer to the PUSCH transmission of one of the services of one of the terminals. Among them, M ≤ N, when M is 1, N may be 1, 2 or 3, etc., and all N transmissions are transmitted in the same configured grant resource. If occupation occurs in the configured grant resource, the terminal sends an SR to the network device.

Further, the notification signalling may also include:
collision information about the collisions on the configured grant resource.

Specifically, if the network device detects that at least two terminals transmit the PUSCH on the same configured grant resource, at least two terminals collide in the configured grant resource, and the network device identifies that the configured grant resource is in the occupied state, and sends collision information and updated configured grant resource status information to at least one of the terminals in which the collision occurs, the terminal can learn from the received configured grant resource status information which configured grant resources are in the idle state and which are in the occupied state, and the terminal selects the configured grant resources in the idle state at this time to transmit the PUSCH. In the case that all the configured grant resources are in the occupied state, if the terminal sends an SR to the network device, the network device schedules retransmission according to the received SR.

Specifically, if the terminal is in the process of transmitting PUSCH on one of the configured grant resources and there are other terminals that also want to occupy the configured grant resource, collisions will occur on the configured grant resource. If the network device detects that collision occurs between two or more terminals, the network device can schedule part or all of the terminals that have collisions to retransmit. When all terminals that have collisions are scheduled for retransmission, the network device sets the status of the above-mentioned configured grant resource to the idle state and when a terminal that has a collision is not scheduled for retransmission, the network device sets the above configured grant resource to the occupied state.

Specifically, when the terminal needs configured grant resources to transmit the PUSCH, the terminal selects one of the configured grant resources in the idle state for transmission. If there is no collision during transmission, the configured grant resource will be occupied until the PUSCH transmission is completed. If the network device detects that a certain transmission ends and the preset condition is met, the network device identifies that the configured grant resource is in the idle state. The preset condition may be that there is no PUSCH transmission for t consecutive transmission opportunities. The value of t is not limited.

The specific explanations and processes of the resource transmission method applied to the network device in the embodiment of the present disclosure are referred to the specific content in the resource transmission method applied to the terminal side, which will not be repeated here.

In the above-mentioned embodiments of the present disclosure, the terminal obtains the configured grant resource status information in real time, thereby transmitting the PUSCH on the configured grant resource in the idle state, and notifying the network device to schedule the terminal for retransmission by sending an SR when there is no configured grant resource in the idle state, and when multiple terminals share a configured grant resource, collisions are avoided, which not only improves resource utilization, but also ensures latency and reliability while improving the resource utilization of the system.

As shown in Fig. 5, the embodiments of the present disclosure also provide a terminal 500, including:
a first obtaining module 510, configured to obtain a notification signalling sent by a network device according to the status of a configured grant resource, the notification signalling including configured grant resource status information, and the configured grant resource status information including at least one of an idle state and an occupied state;
a first processing module 520, configured to select, according to the configured grant resource status information, a configured grant resource in the idle state to transmit a physical uplink shared channel PUSCH, or to send a scheduling request SR when the configured grant resources are all in the occupied state.

Optionally, it also includes:
a second processing module, configure to continue to transmit the PUSCH on the selected configured grant resource, if the selected configured grant resource is in the occupied state, in the configured grant resource status information obtained in a transmission process.

Optionally, it also includes:
a second obtaining module, configured to obtain the resource configuration signalling sent by the network device, the resource configuration signalling including configuring M configured grant resources for each configured grant, wherein M ≥ 1.

Optionally, the first processing module 520 specifically includes:
selecting the configured grant resource with the highest priority from the configured grant resources in the idle state to transmit the PUSCH, according to the preset priority.

Optionally, the notification signalling further includes:
collision information about the collisions on the configured grant resource.

The terminal in the embodiments of the present disclosure corresponds to the embodiments of the above-mentioned resource transmission method, and all the implementation means in the above-mentioned method embodiment are applicable to the embodiment of the terminal, and the same technical effect can also be achieved.

In the above-mentioned embodiment of the present disclosure, the terminal obtains the notification signalling sent by the network device according to the status of the configured grant resource, the notification signalling including configured grant resource status information, and the configured grant resource status information including at least one of the idle state and the occupied state. The terminal selects the configured grant resource in the idle state to transmit a physical uplink shared channel PUSCH according to the configured grant resource status information, or sends an SR when the configured grant resources are all in the occupied state, or the terminal waits for the next configured grant resource status information when the configured grant resources are all in the occupied state. The terminal can obtain the configured grant resource status information in real time, so as to transmit the PUSCH on the configured grant resource in the idle state, and when there is no configured grant resource in the idle state, the terminal can notify network device by sending an SR to schedule the terminal for transmission, which ensures the latency and reliability, and improves the resource utilization of the system.

As shown in Fig. 6, the embodiments of the present disclosure also provide a network device 600, including:
a detection module 610, configured to detect a status of a configured grant resource;
a first sending module 620, configured to send a notification signalling according to the status of the configured grant resource, the notification signalling including configured grant resource status information, and the configured grant resource status information including at least one of the idle state and the occupied state;
a receiving module 630, configured to receive a scheduling request SR sent by a terminal or a physical uplink shared channel PUSCH transmitted on the configured grant resource.

Optionally, it also includes:
a second sending module, configured to send a resource configuration signalling, the resource configuration signalling including configuring M configured grant resources for each configured grant, wherein M ≥ 1.

Optionally, the notification signalling further includes:
collision information about collisions on the configured grant resource.

The network device in the embodiment of the present disclosure corresponds to the embodiment of the above-mentioned resource transmission method, and all the implementation means in the above-mentioned method embodiment are applicable to the embodiment of the network device, and the same technical effect can also be achieved.

In the above-mentioned embodiments of the present disclosure, the terminal obtains the configured grant resource status information in real time, thereby transmitting the PUSCH on the configured grant resource in the idle state, and notifying the network device to schedule the terminal for retransmission by sending an SR when there is no configured grant resource in the idle state, and when multiple terminals share a configured grant resource, collisions are avoided, which not only improves resource utilization, but also ensures latency and reliability while improving the resource utilization of the system.

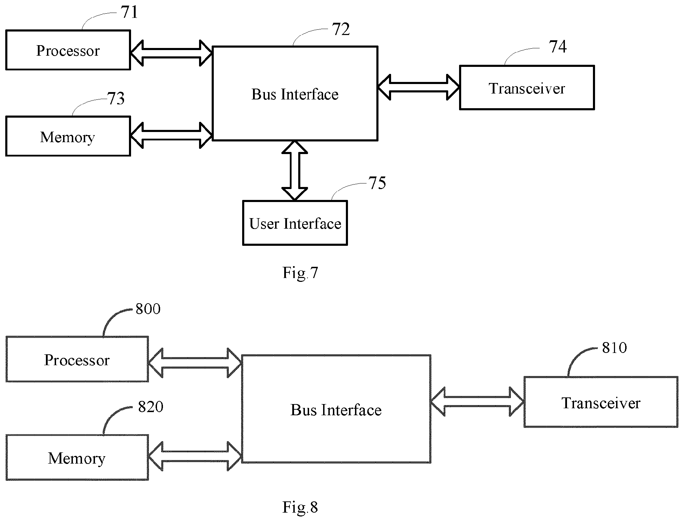

As shown in Fig. 7, the embodiments of the present disclosure also provide a terminal, including:
a processor 71; and a memory 73 connected to the processor 71 through a bus interface 72, the memory 73 is used to store programs and data used by the processor 71 when performing operations, the processor 71is configured to execute the programs and data stored in the memory 73 to implement following steps.

Wherein, the transceiver 74 is connected to bus interface 72 to receive and transmit data under the control of processor 71, specifically, the processor 71 is configured to execute programs to implement the following steps:
obtaining a notification signalling sent by a network device according to the status of a configured grant resource, the notification signalling including configured grant resource status information, and the configured grant resource status information including at least one of an idle state and an occupied state;
selecting, according to the configured grant resource status information, a configured grant resource in the idle state to transmit a physical uplink shared channel PUSCH, or sending a scheduling request SR when the configured grant resources are all in the occupied state.

Optionally, the processor 71 is configured to execute programs to implement the following steps:
continuing to transmit the PUSCH on the selected configured grant resource, if the selected configured grant resource is in the occupied state, in the configured grant resource status information obtained in a transmission process.

Optionally, the processor 71 is configured to execute programs to implement the following steps:
obtaining the resource configuration signalling sent by the network device, the resource configuration signalling including configuring M configured grant resources for each configured grant, wherein M ≥ 1.

Optionally, the processor 71 is configured to execute programs to implement the following steps:
selecting the configured grant resource with the highest priority from the configured grant resources in the idle state to transmit the PUSCH, according to the preset priority.

Optionally, the notification signalling further includes:
collision information about collisions on the configured grant resource.

The terminal in the embodiment of the present disclosure corresponds to the above-mentioned resource transmission method embodiment, and all the implementation means in the above-mentioned method embodiment are applicable to the embodiment of the terminal, and the same technical effect can also be achieved.

It should be noted that, in Fig. 7, the bus architecture may include any number of interconnected buses and bridges, specifically various circuits of one or more processors represented by the processor 71 and the memory represented by the memory 73 are connected together. The bus architecture can also connect various other circuits such as peripheral devices, voltage regulators, power management circuits, etc., which are all known in the field, and therefore, will not be further described herein. The bus interface provides the interface. The transceiver 74 may be a plurality of elements, that is, including a transmitter and a transceiver, and provide a unit for communicating with various other devices on the transmission medium. For different terminals, the user interface 75 may also be an interface capable of connecting externally and internally with required device. The connected device includes but is not limited to a keypad, a display, a speaker, a microphone, a joystick, etc. The processor 71 is responsible for managing the bus architecture and general processing, and the memory 73 can store data used by the processor 71 when performing operations.

Those skilled in the art can understand that all or part of the steps of the above-mentioned embodiments can be implemented by hardware, or by a computer program to instruct relevant hardware. The computer program includes instructions for performing part or all of the steps of the above-mentioned method; and the computer program can be stored in a readable storage medium, which can be any form of storage medium.

As shown in Fig. 8, the embodiments of the present disclosure also provide a network device, which may be specifically a base station, and includes: a processor 800; a memory 820 connected to the processor 800 through a bus interface, and a transceiver 810 connected to the processor 800 through a bus interface; the memory 820 is used to store programs and data used by the processor when performing operations; data information or pilots are sent through the transceiver 810, and the transceiver 810 receives the uplink control channel; the processor 800 is configured to execute the programs and data stored in the memory 820 to implement the following functional modules.

The processor 800 is configured to read the programs in the memory 820 to implement the following steps:
detecting a status of a configured grant resource;
sending a notification signalling according to the status of the configured grant resource, the notification signalling including configured grant resource status information, and the configured grant resource status information including at least one of an idle state and an occupied state;
receiving a scheduling request SR sent by a terminal, or a physical uplink shared channel PUSCH transmitted on the configured grant resource.

The transceiver 810 is configured to receive and send data under the control of the processor 800.

Optionally, the processor 800 is configured to execute the computer program to implement the following steps:
sending a resource configuration signalling, the resource configuration signalling including configuring M configured grant resources for each configured grant, wherein M ≥ 1.

Optionally, the notification signalling further includes:
collision information about collisions on the configured grant resource.

The network device of the embodiment of the present disclosure corresponds to the above-mentioned resource transmission method embodiment, and all the implementation means in the foregoing method embodiment are applicable to the embodiment of the network device, and the same technical effect can also be achieved.

Wherein, in Fig. 8, the bus architecture may include any number of interconnected buses and bridges, specifically various circuits such as one or more processors represented by the processor 800 and the memory represented by the memory 820 are connected together. The bus architecture can also connect various other circuits such as peripheral devices, voltage regulators, power management circuits, etc., which are all known in the field, and therefore, will not be further described herein. The bus interface provides the interface. The transceiver 810 may be a plurality of elements, that is, including a transmitter and a receiver, and provide a unit for communicating with various other devices on the transmission medium. The processor 800 is responsible for managing the bus architecture and general processing, and the memory 820 can store data used by the processor 800 when performing operations.

The embodiments of the present disclosure further provide a computer-readable storage medium storing thereon a computer program. When the computer program is executed by a processor, each process of the above-mentioned information transmission method embodiment is realized, and the same technical effect can be achieved. In order to avoid repetition, a detailed description thereof is omitted. The computer-readable storage medium is, for example, a read-only memory (ROM), random access memory (RAM), magnetic disk, or optical disc, etc.

A person skilled in the art can understand that all or part of the steps of the above-mentioned embodiments can be implemented by hardware, or can also be implemented by instructing the relevant hardware through a computer program. The computer program includes instructions for performing part or all of the steps of the above-mentioned method; and the computer program can be stored in a readable storage medium, and the storage medium can be any form of storage medium.

In addition, it should be pointed out that in the device and method of the present disclosure, obviously, each component or each step can be decomposed and/or recombined. This decomposition and/or recombination should be regarded as equivalent solutions of the present disclosure. In addition, the steps of performing the above series of processing can naturally be performed in a chronological order in description, but do not necessarily need to be performed in the chronological order, and some steps can be performed in parallel or independently of each other. The person skilled in the art can understand that all or any of the steps or components of the method and device of the present disclosure can be used in any computing device (including a processor, storage medium, etc.) or a network of computing devices, and implemented by hardware, firmware, software, or any combination thereof. This can be achieved by the person skilled in the art using their basic programming skills after reading the description of the present disclosure.

Therefore, the purpose of the present disclosure can also be realized by running a program or a group of programs on any computing device. The computing device may be a well-known general-purpose device. Therefore, the purpose of the present disclosure can also be achieved only by providing a program product containing program code for implementing the method or device of the present disclosure. That is, such a program product also constitutes the present disclosure, and a storage medium storing such a program product also constitutes the present disclosure. Obviously, the storage medium may be any well-known storage medium, or any storage medium developed in the future. It should also be pointed out that in the device and method of the present disclosure, obviously, each component or each step can be decomposed and/or recombined. This decomposition and/or recombination should be regarded as equivalent solutions of the present disclosure. In addition, the steps of executing the above-mentioned series of processing can naturally be executed in a chronological order in the description, but it is not necessarily executed in the chronological order. Some steps can be performed in parallel or independently of each other.

The person skilled in the art may realize that the units and algorithm steps described in the embodiments disclosed herein can be implemented by electronic hardware or a combination of computer software and electronic hardware. Whether these functions are executed by hardware or software depends on the specific application and design constraint conditions of the technical solution. The person skilled in the art can use different methods for each specific application to implement the described functions, but such implementation should not be considered as going beyond the scope of the present disclosure.

The person skilled in the art can clearly understand that, for the convenience and conciseness of the description, the specific working process of the system, device, and unit described above can refer to the corresponding process in the foregoing method embodiments, which is not repeated here.

In the embodiments provided in the present disclosure, it should be understood that the disclosed device and method may be implemented in other ways. For example, the device embodiments described above are only illustrative, for example, the division of the units is only a logical function division, and there may be other type of divisions in actual implementation, for example, multiple units or components may be combined or it can be integrated into another system, or some features can be ignored or not implemented. In addition, the displayed or discussed mutual coupling or direct coupling or communication connection may be indirect coupling or communication connection through some interfaces, devices, or units, and maybe in electrical, mechanical, or other forms.

The units described as separate components may or may not be physically separated, and the components displayed as units may or may not be physical units, that is, they may be located in one place, or they may be distributed on multiple network units. Some or all of the units may be selected according to actual needs to achieve the objectives of the solutions of the embodiments.

In addition, the functional units in the various embodiments of the present disclosure may be integrated into one processing unit, or each unit may exist alone physically, or two or more units may be integrated into one unit.

If the function is implemented in the form of a software functional unit and sold or used as an independent product, it can be stored in a computer-readable storage medium. Based on this understanding, the technical solution of the present disclosure essentially or the part that contributes to the related art can be embodied in the form of a software product. The computer software product is stored in a storage medium and includes several instructions to make a computer device (which may be a personal computer, a server, or a network device, etc.) executes all or part of the steps of the methods described in the various embodiments of the present disclosure. The aforementioned storage media include: U disk, mobile hard disk, ROM, RAM, magnetic disk or optical disk, and other media that can store program codes.

The person skilled in the art can understand that all or part of the processes in the above-mentioned embodiment methods can be implemented by controlling the relevant hardware through a computer program. The program can be stored in a computer-readable storage medium, and the program can be stored in a computer-readable storage medium. When executed, it may include the procedures of the above-mentioned method embodiments. Among them, the storage medium may be a magnetic disk, an optical disk, a read-only memory (ROM), or a random access memory (RAM), etc.

It can be understood that the embodiments described in the present disclosure may be implemented by hardware, software, firmware, middleware, microcode, or a combination of them. For hardware implementation, the processing unit can be implemented in one or more application-specific integrated circuits (ASIC), digital signal processor (DSP), digital signal processing device (DSP Device, DSPD), programmable logic device (PLD), Field-Programmable Gate Array (FPGA), general-purpose processors, controllers, microcontrollers, microprocessors, and others for performing the functions described in this disclosure electronic unit or the combination thereof.

For a software implementation, the technology described in the embodiments of the present disclosure can be implemented by modules (for example, procedures, functions, etc.) that perform the functions described in the embodiments of the present disclosure. The software codes can be stored in the memory and executed by the processor. The memory can be implemented in the processor or external to the processor.

The above are optional implementations of the present disclosure. It should be pointed out that for a person skilled in the art, several improvements and modifications can be made without departing from the principles of the present disclosure. These improvements and modifications should also fall within the protection scope of the present disclosure.

## Claims

1. A resource transmission method, applied to a terminal, comprising:
obtaining a notification signalling sent by a network device according to the status of a configured grant resource, the notification signalling comprises configured grant resource status information, and the configured grant resource status information comprises at least one of an idle state and an occupied state;
selecting, according to the configured grant resource status information, a configured grant resource in an idle state to transmit a physical uplink shared channel PUSCH, or sending a scheduling request SR when the configured grant resources are all in the occupied state.

2. The resource transmission method according to claim 1, further comprising:
continuing to transmit the PUSCH on the selected configured grant resource, if the selected configured grant resource is in an occupied state, in the configured grant resource status information obtained in a transmission process.

3. The resource transmission method according to claim 1, wherein, before obtaining the notification signalling sent by the network device according to the status of the configured grant resource, the method further comprises:
obtaining the resource configuration signalling sent by the network device, the resource configuration signalling comprises configuring M configured grant resources for each configured grant, wherein M ≥ 1.

4. The resource transmission method according to claim 1, wherein the selecting the configured grant resource in the idle state to transmit the PUSCH comprises:
selecting the configured grant resource with the highest priority from the configured grant resources in the idle state to transmit the PUSCH, according to preset priorities.

5. The resource transmission method according to claim 1, wherein the notification signalling further comprises:
collision information about collisions on the configured grant resource.

6. A resource transmission method, applied to network device, comprising:
detecting a status of a configured grant resource;
sending a notification signalling according to the status of the configured grant resource, the notification signalling comprises configured grant resource status information, and the configured grant resource status information comprises at least one of an idle state and an occupied state;
receiving a scheduling request SR sent by a terminal, or a physical uplink shared channel PUSCH transmitted on the configured grant resource.

7. The resource transmission method according to claim 6, wherein, before sending the notification signalling, the method further comprises:
sending a resource configuration signalling, the resource configuration signalling comprises configuring M configured grant resources for each configured grant, wherein M ≥ 1.

8. The resource transmission method according to claim 6, wherein the notification signalling further comprises:
collision information about collisions on the configured grant resource.

9. A terminal, comprising: a transceiver, a memory, a processor, and a computer program stored in the memory and configured to be executed by the processor, wherein the processor is configured to execute the computer program to implement following steps:
obtaining a notification signalling sent by a network device according to the status of a configured grant resource, the notification signalling comprises configured grant resource status information, and the configured grant resource status information comprises at least one of an idle state and an occupied state;
selecting, according to the configured grant resource status information, a configured grant resource in an idle state to transmit a physical uplink shared channel PUSCH, or sending a scheduling request SR when the configured grant resources are all in the occupied state.

10. The terminal according to claim 9, wherein the processor is configured to execute the computer program to implement following steps:
continuing to transmit the PUSCH on the selected configured grant resource, if the selected configured grant resource is in an occupied state, in the configured grant resource status information obtained in a transmission process.

11. The terminal according to claim 9, wherein the processor is configured to execute the computer program to implement following steps:
obtaining the resource configuration signalling sent by the network device, the resource configuration signalling comprises configuring M configured grant resources for each configured grant, wherein M ≥ 1.

12. The terminal according to claim 9, wherein the processor is configured to execute the computer program to implement following steps:
selecting the configured grant resource with the highest priority from the configured grant resources in the idle state to transmit the PUSCH, according to preset priorities.

13. The terminal according to claim 9, wherein the notification signalling further comprises:
collision information about collisions on the configured grant resource.

14. A network device, comprising: a transceiver, a memory, a processor, and a computer program stored in the memory and configured to be executed by the processor, wherein the processor is configured to execute the computer program to implement following steps:
detecting a status of a configured grant resource;
sending a notification signalling according to the status of the configured grant resource, the notification signalling comprises configured grant resource status information, and the configured grant resource status information comprises at least one of an idle state and an occupied state;
receiving a scheduling request SR sent by a terminal, or a physical uplink shared channel PUSCH transmitted on the configured grant resource.

15. The network device according to claim 14, wherein the processor is configured to execute the computer program to implement following steps:
sending a resource configuration signalling, the resource configuration signalling comprises configuring M configured grant resources for each configured grant, wherein M ≥ 1.

16. The network device according to claim 14, wherein the notification signalling further comprises:
collision information about collisions on the configured grant resource.

17. A terminal, comprising:
a first obtaining module, configured to obtain a notification signalling sent by a network device according to the status of a configured grant resource, the notification signalling comprises configured grant resource status information, and the configured grant resource status information comprises at least one of an idle state and an occupied state;
a first processing module, configured to select, according to the configured grant resource status information, a configured grant resource in an idle state to transmit a physical uplink shared channel PUSCH, or to send a scheduling request SR when the configured grant resources are all in the occupied state.

18. A network device, comprising:
a detection module, configured to detect a status of a configured grant resource;
a first sending module, configured to send a notification signalling according to the status of the configured grant resource, the notification signalling comprises configured grant resource status information, and the configured grant resource status information comprises at least one of an idle state and an occupied state;
a receiving module, configured to receive a scheduling request SR sent by a terminal or a physical uplink shared channel PUSCH transmitted on the configured grant resource.

19. A computer-readable storage medium storing thereon a computer program, wherein the computer program is configured to be executed by a processor to implement the steps of the resource transmission method according to any one of claims 1 to 8.
